# EUROPÄISCHE PATENTANMELDUNG

(11) **EP 1 655 155 A1**
(43) Veröffentlichungstag der Anmeldung: **10.05.2006**
(21) Anmeldenummer: 04105576.5
(22) Anmeldetag: 08.11.2004
(51) Int. Cl.: B60G 7/00, A61F 2/08

(54) **Radaufhängung mit künstlichem Muskel**

(71) Anmelder: Ford Global Technologies, LLC, A subsidary of Ford Motor Company, Dearborn, MI 48126 (US)
(72) Erfinder: Figura, Michael Georg, 41542 Dormagen (DE); Kluge, Torsten, 51491 Overath (DE)
(74) Vertreter: Drömer, Hans-Carsten

(57) **Zusammenfassung**

Die Erfindung betrifft eine Radaufhängung (1), insbesondere zur Verwendung in einem Kraftfahrzeug, mit einem Radträger (2) zur Aufnahme eines Rades (3).

Des Weiteren betrifft die Erfindung ein Verfahren zur Veränderung mindestens einer Kenngröße einer derartigen Radaufhängung (1).

Es soll eine Radaufhängung (1) der oben genannten Art bereitgestellt werden, mit der die aus dem Stand der Technik bekannten Nachteile überwunden werden und die insbesondere über die Fähigkeit verfügt, mindestens eine Kenngröße variieren zu können, und die kostengünstiger ist als eine herkömmliche Radaufhängung.

Erreicht wird dies mit einer Radaufhängung (1) der oben genannten Art, bei der mindestens ein künstlicher Muskel (4) vorgesehen ist, durch dessen Aktivierung das Rad (3) bewegbar ist d. h. eine Veränderung der Radstellung realisierbar ist.

## Beschreibung

Die Erfindung betrifft eine Radaufhängung, insbesondere zur Verwendung in einem Kraftfahrzeug, mit einem Radträger zur Aufnahme eines Rades.

Des Weiteren betrifft die Erfindung ein Verfahren zur Veränderung mindestens einer Kenngröße einer derartigen Radaufhängung.

Radaufhängungen der oben genannten Art werden nach dem Stand der Technik zur beweglichen Lagerung der Räder eines Kraftfahrzeuges eingesetzt. Dabei bestimmt die Kinematik der Radaufhängung die räumliche Bewegung des Rades bei Federungs- und Lenkbewegungen und damit maßgeblich die Fahreigenschaften des Kraftfahrzeuges im realen Betrieb. Die kinematischen Kenngrößen sind genormt und in der IS08855/DIN70000 zusammengefaßt.

Wesentliche Kenngrößen, die die Lage des Rades im Raum beschreiben, sind der Sturzwinkel, der positiv oder negativ sein kann, und die Spur, wobei zwischen Vorspur und Nachspur unterschieden wird. Bei Starrachsen bleibt der Sturz prinzipbedingt auch bei Kurvenfahrten konstant, während eine Einzelradaufhängung infolge des Einfederns eine Sturzänderung erleidet. Dabei sollte die Sturzänderung den Wankwinkel infolge Kurvenfahrt zumindest teilweise ausgleichen. Auch die Spur ist eine dynamisch veränderbare Kenngröße, die sich im Fahrbetrieb, insbesondere beim Einfedern des Rades, verändert.

Die Radaufhängung übernimmt mit ihren Bauteilen wie dem Radträger, einem Lenker, Federn und Dämpfern die Führung des Rades und die Abstützung des Rades gegenüber den äußeren Kräften. Nach der Anzahl der Freiheitsgrade wird zwischen Starrachsen, Einzelradaufhängung und Verbundachsen unterschieden. Bei gelenkten Achsen kommt grundsätzlich ein Freiheitsgrad, nämlich die Drehung des Rades um eine im wesentlichen vertikale Achse, hinzu.

Die Auswahl eines geeigneten Achskonzeptes wird im wesentlichen von den Randbedingungen vorgegeben, insbesondere der Antriebsart des Fahrzeuges, dem zur Verfügung stehenden Bauraum, den zulässigen Kosten und dem zulässigen Gewicht. Da neben der Radaufhängung an sich auch eine Bremse und eine Betätigungsmöglichkeit für die Bremse vorzusehen ist und das Rad als bewegtes Bauteil Freiraum und genügend Bewegungsfreiheit im Radkasten und außerhalb aufweisen muß, ist man bei der Auslegung der Radaufhängung häufig nicht völlig unabhängig, sondern zu Kompromissen gezwungen, durch die auch einzelne Kenngrößen der Aufhängung beeinflußt bzw. vorgegeben werden.

Grundsätzlich sind die Konstrukteure bei der Auslegung einer Radaufhängung bemüht, eine möglichst platzsparende, leichte und kostengünstige Radaufhängung zu konzipieren, die darüber hinaus die Einstellung der gewünschten Kenngrößen gestattet und von der Kinematik so ausgelegt ist, daß sich die Kenngrößen im Fahrbetrieb, also bei Einfederung und Lenkbewegung, wunschgemäß ändern. Idealerweise sollten die Kenngrößen während des Fahrbetriebes völlig frei wählbar bzw. steuerbar sein.

Nach dem Stand der Technik werden bereits variable bzw. verstellbare Fahrwerke bzw. Radaufhängungen angeboten. Der Radhub kann beispielsweise mittels einer Luftfederung oder einem hydraulisch veränderbaren Fahrwerk verändert d.h. vergrößert oder verkleinert werden. Die Möglichkeiten, Einfluß auf die Kenngrößen und damit auf die nach dem Stand der Technik wenig flexible Kinematik der Radaufhängung zu nehmen, sind aber sehr beschränkt. Im Hinblick auf eine optimierte Fahrsicherheit bei gleichzeitig hohem Fahrkomfort sind die bekannten Systeme unzureichend.

Vor diesem Hintergrund ist es die Aufgabe der vorliegenden Erfindung, eine Radaufhängung gemäß dem Oberbegriff des Anspruchs 1 d. h. der gattungsbildenden Art bereitzustellen, mit der die aus dem Stand der Technik bekannten Nachteile überwunden werden und die insbesondere über die Fähigkeit verfügt, mindestens eine Kenngröße variieren zu können, und die kostengünstiger ist als eine herkömmliche Radaufhängung.

Eine weitere Teilaufgabe der vorliegenden Erfindung ist es, ein Verfahren zur Veränderung mindestens einer Kenngröße einer derartigen Radaufhängung aufzuzeigen.

Gelöst wird die erste Teilaufgabe durch eine Radaufhängung mit einem Radträger zur Aufnahme eines Rades, die dadurch gekennzeichnet ist, daß mindestens ein künstlicher Muskel vorgesehen ist, durch dessen Aktivierung das Rad bewegbar ist d. h. eine Veränderung der Radstellung realisierbar ist.

Künstliche Muskeln sind Aktuatoren, welche in ihren Eigenschaften der natürlichen Muskulatur ähneln bzw. nachgebildet sind. Charakteristisch für künstliche Muskeln ist insbesondere eine im Volumen stattfindende Krafterzeugung aufgrund atomarer oder molekularer Wechselwirkungen. Häufig bestehen künstliche Muskeln - ähnlich wie natürliche Muskeln - aus einem gestaltveränderlichen, weichen Material.

Die Krafterzeugung in bekannten künstlichen Muskeln kann z. B. auf elektrostatischen Anziehungskräften, auf dem piezoelektrischen Effekt, auf einer Ultraschallerzeugung, auf einem Formgedächtnis von Materialien, auf einem lonenaustausch, auf einer Streckung von Kohlenstoff-Nanoröhrchen und/oder auf der Einlagerung von Wasserstoff in Metallhydride beruhen.

Je nach Wirkungsprinzip können künstliche Muskeln aus Polymeren, insbesondere Polymer-Gelen, aus ferroelektrischen Substanzen, aus Silizium, aus Legierungen mit einem Formgedächtnis oder dergleichen hergestellt sein. Eine detaillierte Beschreibung verschiedener Arten künstlicher Muskeln ist z. B. in der EP 0 924 033 A2, der US 2002/0026794 A1, der US 6 109 852 und ähnlicher Patentliteratur zu finden. Darüber hinaus sind Beispiele künstlicher Muskeln in Publikationen der einschlägigen Forschungsinstitute beschrieben (z. B. Max-Planck-Institut für Festkörperforschung in Stuttgart; Abteilung für künstliche Intelligenz des MIT, Massachusetts, USA).

Durch die erfindungsgemäße Verwendung eines künstlichen Muskels zur Ausbildung der Radaufhängung ist es möglich, flexible in ihrer Kinematik veränderbare Aufhängungen bereitzustellen, die in Abhängigkeit von der konkreten Ausbildung der Aufhängung bzw. der Verwendung der künstlichen Muskeln und der Anzahl der künstlichen Muskeln eine Variation mindestens einer Kenngröße der Radaufhängung zulassen.

Wird ein einzelnes Bauteil der Radaufhängung unter Verwendung eines künstlichen Muskels ausgebildet, kann dieses Bauteil durch Aktivierung des künstlichen Muskels in seiner äußeren Gestalt verändert werden. Beispielsweise kann dadurch die Länge der Spurstange, des Spurhebels, des Radträgers, eines Lenkers oder einer anderen beliebigen Strebe vergrößert oder verkleinert werden. Da dieses Bauteil in Wechselbeziehungen zu den übrigen Bauteilen der Raufhängung steht und insbesondere mit dem Radträger gekoppelt ist, auf dem das Rad fixiert wird, ändert sich die Radstellung und die Kinematik im allgemeinen. Dadurch ändert sich auch die Radstellung im Fahrbetrieb d.h. die Radbewegung bei Feder- und Lenkbewegung. Auf diese Weise kann beispielsweise gezielt der Sturzwinkel oder die Spur verstellt werden, was noch näher im Rahmen der Figurenbeschreibung erörtert wird.

Im Vergleich zu herkömmlichen Radaufhängungen ist die erfindungsgemäße Radaufhängung bei Berücksichtigung der sich ergebenden Verstellmöglichkeiten kostengünstiger und umfaßt dabei nur wenige Bauteile, weshalb die erfindungsgemäße Radaufhängung auch einen geringen Raumbedarf aufweist. Die Radaufhängung weist zudem ein vergleichsweise geringes Eigengewicht auf, da das Material, aus dem künstliche Muskeln ausgebildet sind, von geringerem spezifischen Gewicht ist.

Durch die Verwendung eines künstlichen Muskels zur Ausbildung der Radaufhängung wird somit die erste der Erfindung zugrunde liegende Aufgabe gelöst, nämlich eine Radaufhängung bereitzustellen, die über die Fähigkeit verfügt, mindestens eine Kenngröße variieren zu können, und die kostengünstiger ist als eine herkömmliche Radaufhängung.

Weitere vorteilhafte Ausführungsformen der Radaufhängung werden im Zusammenhang mit den Unteransprüchen erörtert.

Vorteilhaft sind Ausführungsformen der Radaufhängung, bei denen der Radträger mindestens einen künstlichen Muskel umfaßt.

Vorteilhaft sind Ausführungsformen der Radaufhängung, bei denen ein Federbein vorgesehen ist, welches eine Feder und einen Dämpfer aufweist. Bei der Auslegung der Feder und des Dämpfers ist ein Kompromiß zwischen Fahrsicherheit und Fahrkomfort erforderlich. Das Federbein sollte einerseits möglichst weich ausgelegt sein, um einen hohen Fahrkomfort zu gewährleisten und andererseits im Hinblick auf die Fahrsicherheit für eine möglichst gute Bodenhaftung sorgen, was eine eher harte Auslegung verlangt. Die Feder und der Dämpfer sind vorzugsweise konzentrisch angeordnet, wobei durch eine Schräganordnung der Feder zur Dämpferachse eine infolge Querkräften verursachte erhöhte Dämpferreibung reduziert wird.

Vorteilhaft sind dabei Ausführungsformen der Radaufhängung, bei denen der Dämpfer des Federbeins fest mit dem Radträger verbunden ist. Diese Ausführungsform wird auch als Federbeinachse oder McPherson-Achse bezeichnet. Das Federbein übernimmt dabei zusätzlich radführende Aufgaben. Vorteile bietet diese Ausführungsform hinsichtlich des Bauraumbedarfs und der geringen Anzahl an Bauteilen.

Vorteilhaft sind Ausführungsformen der Radaufhängung, bei denen mindestens ein Lenker vorgesehen ist. Abgesehen von Starrachsen, die überwiegend bei Nutzfahrzeugen und Geländewagen zum Einsatz kommen und bei denen die Führung des Rades häufig mittels Blattfedern erfolgt, benötigt eine Radaufhängung mindestens einen Lenker zur Führung des Rades. Die unterschiedliche Ausführung des mindestens einen Lenkers folgt dabei der Bauweise der Raufhängung bzw. der Achse. D. h. eine Schräglenkerachse, eine Längslenkerachse, eine Doppelquerlenkerachse bzw. eine Vierstab-Verbundlenkerachse verfügen mindestens über einen Schräglenker, einen Längslenker, zwei Querlenker bzw. einen Verbundlenker.

Vorteilhaft sind Ausführungsformen der Radaufhängung, bei denen der mindestens eine Lenker ein Querlenker ist. Ein Querlenker ist drehbar um die Fahrzeuglängsachse gelagert und vorzugsweise als Dreieckslenker ausgebildet, wobei der Querlenker gelenkig mit dem Radträger verbunden ist. Alternativ kann der Dreieckslenker durch zwei Stablenker ersetzt werden, was sich insbesondere bei Platzmangel im Radbereich anbietet.

Vorteilhaft sind Ausführungsformen der Radaufhängung, bei denen der mindestens eine Lenker mindestens einen künstlichen Muskel umfaßt. Da der mindestens eine Lenker als gelenkig gelagertes und bewegliches Bauteil der Radaufhängung prinzipbedingt Einfluß hat auf die räumliche Ausrichtung des Rades und damit auf die Radstellung, kann ein in der Gestalt veränderlicher Lenker auch zur gezielten Beeinflussung der Radstellung dienen und herangezogen werden. Die Fähigkeit, seine äußere Gestalt bzw. seine strukturelle Konfiguration ändern zu können, wird dem Lenker durch die Verwendung mindestens eines künstlichen Muskels bei seiner Herstellung verliehen.

Durch Aktivierung bzw. Deaktivierung wird der Muskel und damit der Lenker von einer bestimmten ersten Konfiguration in eine andere zweite Konfiguration überführt, wobei die Gelenke des Lenkers, sofern sie nicht ortsfest am Aufbau fixiert sind, eine Lageveränderung erfahren und dadurch beispielsweise den Radträger, den Spurhebel und/oder die Spurstange verstellen.

Auf diese Weise kann ein Querlenker, der mindestens einen künstlichen Muskel umfaßt, zur gezielten Verstellung der Spur oder des Sturzes genutzt werden, was noch näher im Zusammenhang mit den Figuren beschrieben werden wird.

Vorteilhaft sind Ausführungsformen der Radaufhängung, bei denen eine Spurstange vorgesehen ist. Ist das Rad als lenkbares Rad ausgeführt bzw. die unter Verwendung der Radaufhängung ausgebildete Achse als lenkbare Achse, dann wird zur Übertragung der Lenkbewegung des Fahrers, die über das Lenkgetriebe und das Lenkgestänge auf den Radträger erfolgt, eine Spurstange benötigt, die das aufbaufeste Lenkgetriebe bzw. Lenkgestänge und den mit dem Radträger fest verbundnen Spurhebel verbindet. Die Position und Länge der Spurstange sind dabei so zu wählen, daß sowohl die gewünschte Federbewegung als auch die angestrebte Lenkbewegung bzw. das angestrebte Lenkverhalten erzielt wird.

Vorteilhaft sind bei Verwendung einer Spurstange Ausführungsformen der Radaufhängung, bei denen die Spurstange mindestens einen künstlichen Muskels umfaßt. Diese Ausführungsform ermöglicht es, auf ein Lenkgetriebe und Lenkgestänge im herkömmlichen Sinn zu verzichten bzw. diese Bauteile durch eine modifizierte und erfindungsgemäß ausgebildete Spurstange zu ersetzen. Die mittels eines künstlichen Muskels ausgebildete Spurstange, die durch Aktivierung bzw. Deaktivierung ihre äußere Gestalt ändert, bewegt infolge ihrer Verbindung mit dem Spurhebel und dem Radträger das Rad im Rahmen ihres Transformationsprozesses d.h. aufgrund ihrer geänderten strukturellen Konfiguration.

Dadurch ermöglicht diese Ausführungsform auch das sogenannte "steer by wire", das im Gegensatz zu den - beispielsweise unter Verwendung von Lenkgetrieben und Lenkgestängen ausgebildeten - mechanischen Betätigungsvorrichtungen für das Lenken, den Lenkvorgang mittels via Drähten weitergeleiteten Signalen steuert, beispielsweise mittels elektrischer Signale.

Darüber hinaus kann die unter Verwendung mindestens eines künstlichen Muskels ausgebildete Spurstange auch zusätzlich zu den aus dem Stand der Technik bekannten Lenkgetrieben und Lenkgestängen eingesetzt werden und dann beispielsweise zur Einstellung der Spur dienen. Dabei können mit einer derartigen Spurstange Ausführungsformen der Radaufhängung realisiert werden, bei denen die Spur kontinuierlich der jeweiligen Fahrsituation angepaßt wird, wodurch insbesondere eine Spurverstellung in Abhängigkeit vom Einfederweg, einer Brems- bzw. Anfahrnickneigung, einer Wankneigung, einer Kurvenfahrt und dergleichen erfolgen kann.

Vorteilhaft sind Ausführungsformen der Radaufhängung, bei denen der mindestens eine künstliche Muskel bei Aktivierung expandiert und auf diese Weise eine Veränderung der Radstellung realisiert. Diese Ausführungsform eignet sich für eine Ausgestaltung eines Bauteils der Radaufhängung, bei dem mittels einer Längenveränderung, Breitenveränderung oder Dickenveränderung Einfluß auf die Kinematik der Radaufhängung bzw. auf die Radstellung genommen werden kann, beispielsweise für die Ausbildung einer Spurstange.

Vorteilhaft sind aber auch Ausführungsformen der Radaufhängung, bei denen der mindestens eine künstliche Muskel bei Aktivierung kontrahiert und auf diese Weise eine Veränderung der Radstellung realisiert. Im Gegensatz zu der zuvor beschriebenen Ausführungsform wird durch Aktivierung des mindestens einen künstlichen Muskel eine Verkürzung des Muskels bzw. des Bauteils herbeigeführt, was aber wieder grundsätzlich auch zur Verkleinerung der Breite oder Dicke des Bauteils genutzt werden kann, da die Gestaltänderung infolge der Kontraktion des mindestens einen künstlichen Muskels hinsichtlich aller drei Raumrichtungen genutzt werden kann.

Vorteilhaft sind auch Ausführungsformen der Radaufhängung, bei denen der mindestens eine künstliche Muskel bei Aktivierung seine äußere Form ändert und auf diese Weise eine Veränderung der Radstellung realisiert. So können künstliche Muskeln zum Einsatz kommen, die bei Aktivierung von eine eher langgestreckten Form in eine gekrümmte wechseln oder umgekehrt. Auch ein unter Verwendung eines derartigen Muskels ausgebildetes Bauteil verleiht der Radaufhängung die Fähigkeit, ihre Kinematik zu ändern bzw. mindestens eine ihrer Kenngrößen zu variieren.

Vorteilhaft sind Ausführungsformen der Radaufhängung, bei denen der mindestens eine künstliche Muskel Kohlenstoff-Nanoröhrchen umfaßt. Derartige künstliche Muskelelemente zeichnen sich durch ihre hohe Hitzebeständigkeit bis zu 1000°C aus. Ferner können derartige Muskelelemente durch elektrische Energie gesteuert werden (vgl. Science vom 21.05.1999), was in einfacher Weise durch die Bordbatterie erfolgen kann. Bei Aktivierung expandieren Kohlenstoff-Nanoröhrchen.

Kohlenstoff-Nanoröhrchen können in papierähnlichen Mehrschichtstrukturen gebündelt werden und erlauben eine erhebliche Krümmung der gesamten Muskelstruktur. Sie zeichnen sich ferner durch ein geringes Verhältnis von Expansion zu Kontraktion aus, was als vorteilhaft anzusehen ist.

Vorteilhaft sind aber auch Ausführungsformen der Radaufhängung, bei denen der mindestens eine künstliche Muskel mindestens ein Polymergel umfaßt. Künstliche Muskeln auf der Basis von Polymer-Hydrogelen können durch elektrische Signale gesteuert werden und kontrahieren bei Aktivierung (vgl. Low, L. W.; Madou, M. J. "Microactuators towards microvalves for controlled drug delivery", Sensors and Actuators B: Chemical, 67 (1-2) (2000) pp. 149-160).

Hinsichtlich der beiden zuletzt genannten Ausführungsformen wird zudem Bezug genommen auf die zuvor erwähnten Ausführungsformen, bei denen künstliche Muskeln verwendet werden, die bei Aktivierung expandieren bzw. sich zusammenziehen.

Grundsätzlich können aber auch künstliche Muskeln zum Einsatz kommen, die sowohl eine aktive Kontraktion als auch Expansion erlauben d.h. künstliche Muskeln, die durch geeignete Aktivierung expandieren und sich bei einer andersartigen Aktivierung zusammenziehen.

Vorteilhaft sind Ausführungsformen der Radaufhängung, bei denen der mindestens eine künstliche Muskel mindestens einen Formgedächtniswerkstoff umfaßt.

Formgedächtniswerkstoffe an sich - sogenannte shape memory materials oder shape memory alloys - sind seit mehr als fünfzig Jahren bekannt. Sie besitzen die Fähigkeit, ihre äußere Gestalt in Abhängigkeit von der Temperatur, von der magnetischen Feldstärke oder von dem hydraulischen Druck, dem sie ausgesetzt sind, oder dergleichen zu ändern. Unter die Formgedächtniswerkstoffe werden im Rahmen der vorliegenden Erfindung sämtliche Werkstoffe subsumiert, die über ein Formgedächtnis verfügen, insbesondere die Formgedächtnislegierungen wie NiTi (Nitinol), Fe-Pt, Cu-Al-Ni, Fe-Pd, Fe-Ni, Cu-Zn-Al, CuAlMn, aber auch Keramiken mit Formgedächtnis, wie beispielsweise Ce-TZP-Keramik.

Beispielsweise kann eine aus einem länglichen Draht geformte Büroklammer ihre Gestalt in der Art ändern, daß die Büroklammer - in einen Topf mit heißem Wasser gelegt - mit steigender Temperatur und bei Erreichen einer sogenannten Übergangstemperatur T' in ihre ursprüngliche Form übergeht d. h. die Gestalt eines länglichen Drahtes annimmt. Sie ändert dabei ihre äußere Gestalt oder - mit anderen Worten gesagt - ihre strukturelle Konfiguration.

Ist dieser Transformationsprozeß umkehrbar, so handelt es sich bei dem Formgedächtniswerkstoff um einen sogenannten Zwei-Weg-Formgedächtniswerkstoff, andernfalls um einen Ein-Weg-Formgedächtniswerkstoff.

Folglich könnte der oben beschriebene Übergang der Büroklammer zu einem länglichen Draht bei geeigneter Auswahl eines Zwei-Weg-Formgedächtniswerkstoffes rückgängig gemacht werden. Hierzu wird die Temperatur abgesenkt, wobei der Draht sich bei Unterschreiten einer Übergangstemperatur T" zu einer Büroklammer umformt. Die Aktivierung durch Temperaturveränderung soll nur als Beispiel verstanden werden. Für den vorliegenden Fall - einer unter Verwendung von Formgedächtniswerkstoffen hergestellten Radaufhängung - ist die Aktivierung mittels elektrischer Signale eher geeignet.

Die Ausbildung einer erfindungsgemäßen Radaufhängung erfordert prinzipbedingt einen Zwei -Weg-Formgedächtniswerkstoff, so daß die Radaufhängung bzw. ihre Kinematik einerseits verändert werden kann und andererseits diese Veränderung wieder rückgängig bzw. aufgehoben werden kann.

Vorteilhaft sind Ausführungsformen der Radaufhängung, bei denen der mindestens eine künstliche Muskel elektrisch steuerbar ist. Insbesondere kann dabei die vom Muskelelement erzeugte mechanische Energie aus der elektrischen Energie des Signals stammen. Elektrisch gesteuerte künstliche Muskelelemente haben den Vorteil, daß diese mit der üblichen Steuerungstechnik einer Brennkraftmaschine kompatibel sind.

Vorteilhaft sind Ausführungsformen der Radaufhängung, bei denen der mindestens eine künstliche Muskel stufenweise steuerbar ist, insbesondere zweistufig schaltbar ist. Eine derartige Ausbildung der Radaufhängung erleichtert die Steuerung, insbesondere wenn der künstliche Muskel gemäß einer Ein-Aus-Schaltung funktioniert d. h. lediglich von einem deaktivierten Zustand in einen aktivierten Zustand wechselt und umgekehrt. Komplexe Kennfelder müssen bei dieser Ausführungsform nicht generiert und bereitgestellt werden, wie dies beispielsweise bei stufenlos steuerbaren künstlichen Muskelelementen bzw. Aufhängungen erforderlich ist.

Vorteilhaft sind aber unter anderen Gesichtspunkten auch Ausführungsformen der Radaufhängung, bei denen der mindestens eine künstliche Muskel stufenlos steuerbar ist. Dies gestattet eine größere Vielfalt und Flexibilität bei der Veränderung der Kinematik der Aufhängung bzw. ihrer Kenngrößen. Insbesondere wird hierdurch eine kontinuierliche Veränderung von Kenngrößen und eine individuelle Anpassung der Aufhängung an den momentanen Fahrzustand ermöglicht.

Die zweite der Erfindung zugrunde liegende Teilaufgabe wird gelöst durch ein Verfahren zur Veränderung mindestens einer Kenngröße einer Radaufhängung eines Kraftfahrzeuges, die einen Radträger zur Aufnahme eines Rades aufweist, das dadurch gekennzeichnet ist, daß die Radaufhängung unter Verwendung mindestens eines künstlichen Muskels ausgebildet wird, wobei durch Aktivierung des mindestens einen künstlichen Muskels die räumliche Position des Rades relativ zum Aufbau des Kraftfahrzeuges verändert wird.

Das bereits für die erfindungsgemäße Radaufhängung Gesagte gilt auch für das erfindungsgemäße Verfahren.

Vorteilhaft sind Ausführungsformen des Verfahrens, bei denen der mindestens eine künstliche Muskel elektrisch aktiviert d. h. gesteuert wird. Dies erleichtert die Aktivierung des künstlichen Muskels aufgrund bereits an der Brennkraftmaschine bzw. im Fahrzeug vorhandener Systeme. Die Aktivierung kann mittels der Motorsteuerung und der Bordbatterie realisiert werden.

Zur Veränderung mindestens einer Kenngröße einer Radaufhängung eines Kraftfahrzeuges, die eine Spurstange aufweist, sind Ausführungsformen des Verfahrens vorteilhaft, bei denen die Spurstange unter Verwendung mindestens eines künstlichen Muskels ausgebildet wird und eine Veränderung der Spur durch Aktivierung des mindestens einen künstlichen Muskels realisiert wird.

Bei Radaufhängungen, die einen Lenker aufweisen, sind Ausführungsformen des Verfahrens zur Veränderung mindestens einer Kenngröße vorteilhaft, bei denen der Lenker unter Verwendung mindestens eines künstlichen Muskels ausgebildet wird und eine Veränderung des Sturzwinkels durch Aktivierung des mindestens einen künstlichen Muskels realisiert wird.

Im folgenden wird die Erfindung anhand von drei Ausführungsbeispielen gemäß den Figuren 1, 2 und 3 näher beschrieben. Hierbei zeigt:
- Fig. 1: schematisch und in einer perspektivischen Darstellung eine erste Ausführungsform der Radaufhängung,
- Fig. 2: schematisch und in einer perspektivischen Darstellung eine zweite Ausführungsform der Radaufhängung, und
- Fig. 3: schematisch und in einer perspektivischen Darstellung eine dritte Ausführungsform der Radaufhängung.

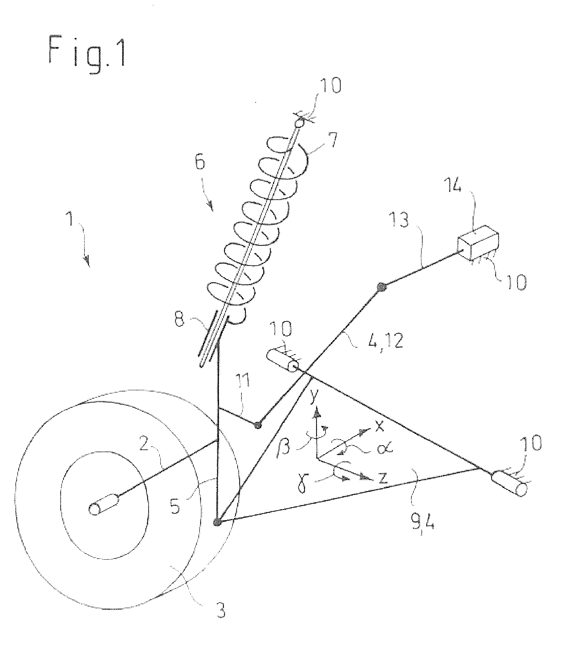

Figur 1 zeigt schematisch und in einer perspektivischen Darstellung eine erste Ausführungsform der Radaufhängung 1.

Die Radaufhängung 1 verfügt über einen Radträger 2 zur Aufnahme eines Rades 3. Dieser Radträger 2 weist eine Hochstrebe 5 auf, die sich oberhalb des Rades 3 an einem Federbein 6 abstützt bzw. am oberen Ende zur radseitigen Aufnahme des Federbeins 6 dient. Das Federbein 6 ist ein Verbund aus Feder 7 und Dämpfer 8, wobei Feder 7 und Dämpfer 8 konzentrisch angeordnet sind. Der Dämpfer 8 ist fest mit dem Radträger 2 verbunden. Die gezeigte Ausführung wird auch als FederbeinAchse oder McPherson-Achse bezeichnet.

Am unteren Ende der Hochstrebe 5 ist ein Querlenker 9 in Gestalt eines Dreieckslenkers gelenkig mit der Hochstrebe 5 verbunden, wobei der Querlenker 9 aufbauseitig in der Art an der Karosserie 10 gelagert ist, daß sich der Querlenker 9 um eine Achse in Richtung Fahrzeuglängsachse, die als z-Achse gekennzeichnet ist, um einen Winkel γ drehen läßt.

In Anlehnung an die in der Fahrzeugtechnik in anderem Zusammenhang üblichen Bezeichnungen kann die x-Achse bzw. y-Achse bzw. z-Achse auch als Nickachse, Gierachse bzw. Wankachse bezeichnet werden. Entsprechend tragen die Drehrichtungen bzw. Drehwinkel um diese Achsen die Bezeichnungen Nickwinkel, Gierwinkel und Wankwinkel.

Zwischen Federbein 6 und Querlenker 9 verfügt die Hochstrebe 5 über einen Spurhebel 11, an dessen Ende eine Spurstange 12 gelenkig angeschlossen ist. Das andere Ende der Spurstange 12 ist mit einem Lenkgestänge 13 gelenkig verbunden. Das Lenkgestänge 13 kann beispielsweise als Zahnstange ausgebildet sein. Um die Lenkbewegung des Fahrers in eine translatorische Bewegung des Lenkgestänges 13 bzw. der Zahnstange zu transformieren, ist ein Lenkgetriebe 14 erforderlich. Beim Lenken wird das Lenkgestänge 13 geradlinig verschoben, wodurch die mit dem Lenkgestänge 13 verbundene Spurstange 12 eine Lageveränderung erfährt, bei der sie den Spurhebel 11 mitnimmt, wodurch das Rad 3 eine Drehung erfährt.

Bei der in Figur 1 dargestellten Ausführungsform ist die Spurstange 12 unter Verwendung eines künstlichen Muskels 4 ausgebildet. Der Werkstoff des künstlichen Muskels 4 wurde dabei in der Art ausgewählt und angeordnet, daß er sich bei Aktivierung bzw. Deaktivierung entlang der Längsachse der Spurstange 12 zusammenzieht bzw. expandiert. Hierzu eignen sich Kohlenstoff-Nanoröhrchen, die bei Aktivierung expandieren, oder Polymergel, das sich bei Aktivierung zusammenzieht.

Wird die unter Verwendung eines künstlichen Muskels 4 ausgebildete Spurstange 12 verlängert, hat dies eine Drehung des Rades 3 in der Art zur Folge, daß das Rad 3 in Richtung Vorspur gedreht wird d. h. in der Draufsicht von oben in Richtung y-Achse gesehen steht das Rad 3 weiter nach innen. Dabei wird davon ausgegangen, daß die z-Achse nach hinten und die negative z-Achse nach vorne zeigt. Umgekehrt wird das Rad 3 in Richtung Nachspur verstellt, wenn die Spurstange 12 sich verkürzt und das Rad 3 mittels Spurhebel 11 nach außen dreht.

Die erfindungsgemäße Verwendung mindestens eines künstlichen Muskels 4 zur Ausbildung der Radaufhängung 1 bzw. Spurstange 12 gestattet somit die Veränderung bzw. Variation der Spur als eine wichtige Kenngröße der Radaufhängung 1.

Der Querlenker 9 ist ebenfalls als künstlicher Muskel 4 ausgeführt. Wird die äußere Gestalt des Querlenkers 9 in der Art verändert, daß sich der Querlenker 9 zusammenzieht - beispielsweise durch geeignete Aktivierung bzw. Deaktivierung des mindestens einen künstlichen Muskels 4 - und das Gelenk, mit dem der Querlenker 9 an der Hochstrebe 5 befestigt ist, nach innen in Richtung x-Achse wandert, wird das Rad 3 nach außen gekippt, wodurch der Sturzwinkel verstellt wird.

Die erfindungsgemäße Verwendung mindestens eines künstlichen Muskels 4 zur Ausbildung der Radaufhängung 1 bzw. des Querlenkers 9 gestattet somit die Veränderung bzw. Variation des Sturzwinkels als eine wichtige Kenngröße der Radaufhängung 1.

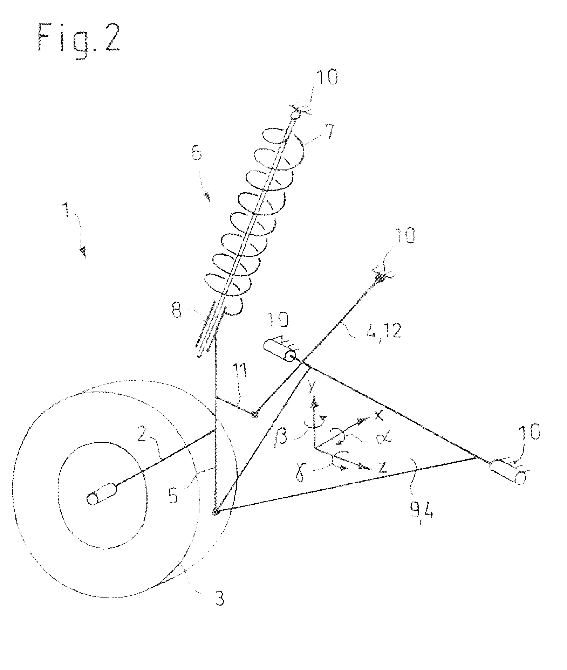

Figur 2 zeigt schematisch und in einer perspektivischen Darstellung eine zweite Ausführungsform der Radaufhängung 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Gegensatz zu der ersten Ausführungsform gemäß Figur 1, bei der die unter Verwendung mindestens eines künstlichen Muskels 4 ausgebildete Spurstange 12 zwecks Spureinstellung bzw. -verstellung zusätzlich zu einem Lenkgetriebe 14 und Lenkgestänge 13 vorgesehen wird, ist bei der zweiten, in Figur 2 dargestellten Ausführungsform die mittels eines künstlichen Muskels 4 ausgebildete Spurstange 12 auch für den Lenkvorgang zu verwenden, weshalb die zweite Ausführungsform weder ein Lenkgetriebe noch ein Lenkgestänge aufweist bzw. benötigt. Dafür muß aber die Expansion und Kontraktion der Spurstange 12 ausreichend bemessen sein, um über eine geringe Spurverstellung hinaus große Lenkbewegungen realisieren zu können.

Die Spurstange 12 kann dann mittels elektrischer Signale aktiviert bzw. deaktiviert werden und ihre äußere Gestalt ändern. Infolge der Verbindung mit dem Spurhebel 11 und dem Radträger 2 verdreht die Spurstange 12 das Rad 3 im Rahmen eines Transformationsprozesses.

Dadurch ermöglicht diese Ausführungsform auch das sogenannte "steer by wire", das im Gegensatz zu den herkömmlichen mechanischen Betätigungsvorrichtungen, die sich Lenkgetrieben und Lenkgestängen bedienen, den Lenkvorgang mittels durch Drähte geleitete Signale steuert. Insbesondere der Wegfall der Lenksäule ist als vorteilhaft anzusehen, da diese sich häufig bei Unfällen in den Fahrgastraum hinein und auf den Fahrer zu bewegt und für Verletzungen verantwortlich ist.

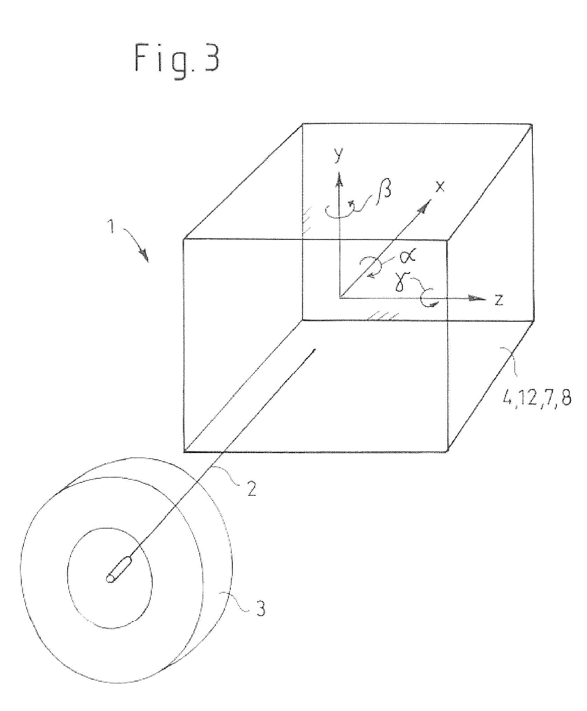

Figur 3 zeigt schematisch und in einer perspektivischen Darstellung eine dritte Ausführungsform der Radaufhängung 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Gegensatz zu der zweiten Ausführungsform gemäß Figur 2 verfügt die in Figur 3 gezeigte Aufhängung 1 nicht mehr über ein separates Federbein oder über einen separaten Querlenker. Abgesehen von dem Radträger 2, der die Aufgabe hat, das Rad 3 aufzunehmen, übernimmt ein künstlicher Muskel 4 sämtliche Aufgaben, die ursprünglich auf den Lenker, die Spurstange, das Federbein und das Lenkgestänge bzw. -getriebe verteilt sind. Dieser künstliche Muskel 4 ist nicht nur Feder 7 und Dämpfer 8, sondern auch flexible Spurstange 12 zum Lenken.

### Bezugszeichen

- 1: Radaufhängung
- 2: Radträger
- 3: Rad
- 4: künstlicher Muskel
- 5: Hochstrebe
- 6: Federbein
- 7: Feder
- 8: Dämpfer
- 9: Querlenker
- 10: Aufbau, Karosserie
- 11: Spurhebel
- 12: Spurstange
- 13: Lenkgestänge
- 14: Lenkgetriebe

- x: Querachse des Fahrzeuges
- y: Hochachse des Fahrzeuges
- z: Längsachse des Fahrzeuges
- α: Nickwinkel
- β: Gierwinkel
- γ: Wankwinkel

## Patentansprüche

1. Radaufhängung (1), insbesondere zur Verwendung in einem Kraftfahrzeug, mit einem Radträger (2) zur Aufnahme eines Rades (3),
**dadurch gekennzeichnet, daß**
mindestens ein künstlicher Muskel (4) vorgesehen ist, durch dessen Aktivierung das Rad (3) bewegbar ist d.h. eine Veränderung der Radstellung realisierbar ist.

2. Radaufhängung (1) nach Anspruch 1,
**dadurch gekennzeichnet, daß**
der Radträger (2) mindestens einen künstlichen Muskel (4) umfaßt.

3. Radaufhängung (1) nach Anspruch 1 oder 2,
**dadurch gekennzeichnet, daß**
ein Federbein (6) vorgesehen ist, welches eine Feder (7) und einen Dämpfer (8) aufweist.

4. Radaufhängung (1) nach Anspruch 4,
**dadurch gekennzeichnet, daß**
der Dämpfer (8) des Federbeins (6) fest mit dem Radträger (2) verbunden ist.

5. Radaufhängung (1) nach Anspruch 1,
**dadurch gekennzeichnet, daß**
mindestens ein Lenker (9) vorgesehen ist

6. Radaufhängung (1) nach Anspruch 5,
**dadurch gekennzeichnet, daß**
der Lenker (9) ein Querlenker (9) ist.

7. Radaufhängung (1) nach Anspruch 5 oder 6,
**dadurch gekennzeichnet, daß**
der Lenker (9) mindestens einen künstlichen Muskel (4) umfaßt.

8. Radaufhängung (1) nach einem der vorherigen Ansprüche,
**dadurch gekennzeichnet, daß**
eine Spurstange (12) vorgesehen ist.

9. Radaufhängung (1) nach Anspruch 8,
**dadurch gekennzeichnet, daß**
die Spurstange (12) mindestens einen künstlichen Muskels (4) umfaßt.

10. Radaufhängung (1) nach einem der vorherigen Ansprüche,
**dadurch gekennzeichnet, daß**
der mindestens eine künstliche Muskel (4) bei Aktivierung expandiert und auf diese Weise eine Veränderung der Radstellung realisierbar ist.

11. Radaufhängung (1) nach einem der Ansprüche 1 bis 9,
**dadurch gekennzeichnet, daß**
der mindestens eine künstliche Muskel (4) bei Aktivierung kontrahiert und auf diese Weise eine Veränderung der Radstellung realisierbar ist.

12. Radaufhängung (1) nach einem der Ansprüche 1 bis 9,
**dadurch gekennzeichnet, daß**
der mindestens eine künstliche Muskel (4) bei Aktivierung seine äußere Form ändert und auf diese Weise eine Veränderung der Radstellung realisierbar ist.

13. Radaufhängung (1) nach einem der Ansprüche 1 bis 10,
**dadurch gekennzeichnet, daß**
der mindestens eine künstliche Muskel (4) Kohlenstoff-Nanoröhrchen umfaßt.

14. Radaufhängung (1) nach einem der Ansprüche 1 bis 9 oder 11,
**dadurch gekennzeichnet, daß**
der mindestens eine künstliche Muskel (4) mindestens ein Polymergel umfaßt.

15. Radaufhängung (1) nach einem der Ansprüche 1 bis 9 oder 12,
**dadurch gekennzeichnet, daß**
der mindestens eine künstliche Muskel (4) mindestens einen Formgedächtniswerkstoff umfaßt.

16. Radaufhängung (1) nach einem der vorherigen Ansprüche,
**dadurch gekennzeichnet, daß**
der mindestens eine künstliche Muskel (4) elektrisch steuerbar ist.

17. Radaufhängung (1) nach einem der vorherigen Ansprüche,
**dadurch gekennzeichnet, daß**
der mindestens eine künstliche Muskel (4) stufenweise steuerbar ist.

18. Radaufhängung (1) nach Anspruch 17,
**dadurch gekennzeichnet, daß**
der mindestens eine künstliche Muskel (4) zweistufig schaltbar ist.

19. Radaufhängung (1) nach einem der Ansprüche 1 bis 16,
**dadurch gekennzeichnet, daß**
der mindestens eine künstliche Muskel (4) stufenlos steuerbar ist.

20. Verfahren zur Veränderung mindestens einer Kenngröße einer Radaufhängung (1) eines Kraftfahrzeuges, die einen Radträger (2) zur Aufnahme eines Rades (3) aufweist,
**dadurch gekennzeichnet, daß**
die Radaufhängung (1) unter Verwendung mindestens eines künstlichen Muskels (4) ausgebildet wird, wobei durch Aktivierung des mindestens einen künstlichen Muskels (4) die räumliche Position des Rades (3) relativ zum Aufbau (10) des Kraftfahrzeuges verändert wird.

21. Verfahren nach Anspruch 20,
**dadurch gekennzeichnet, daß**
der mindestens eine künstliche Muskel (4) elektrisch aktiviert d. h. gesteuert wird.

22. Verfahren nach Anspruch 20 oder 21 zur Veränderung mindestens einer Kenngröße einer Radaufhängung (1) eines Kraftfahrzeuges, die eine Spurstange (12) aufweist,
**dadurch gekennzeichnet, daß**
die Spurstange (12) unter Verwendung mindestens eines künstlichen Muskels (4) ausgebildet wird und eine Veränderung der Spur durch Aktivierung des mindestens einen künstlichen Muskels (4) realisiert wird.

23. Verfahren nach Anspruch 20 oder 21 zur Veränderung mindestens einer Kenngröße einer Radaufhängung (1) eines Kraftfahrzeuges, die einen Lenker aufweist,
**dadurch gekennzeichnet, daß**
der Lenker (9) unter Verwendung mindestens eines künstlichen Muskels (4) ausgebildet wird und eine Veränderung des Sturzwinkels durch Aktivierung des mindestens einen künstlichen Muskels (4) realisiert wird.
